# EUROPEAN PATENT APPLICATION

(11) **EP 1 777 026 A1**
(43) Date of publication of application: **25.04.2007**
(21) Application number: 05767104.2
(22) Date of filing: 28.07.2005
(51) Int. Cl.: B23B 47/34

(54) **CHIP BREAKER FOR ANNULAR CUTTER**

(30) Priority: 09.08.2004 JP 2004232246
(71) Applicant: NITTO KOHKI CO., LTD., Ohta-ku, Tokyo 146-8555 (JP)
(72) Inventor: SHOJI, Michihiro, NITTO KOHKI CO., LTD., Ohta-ku, Tokyo 1468555 (JP); ASANO, Osamu, NITTO KOHKI CO., LTD., Ohta-ku, Tokyo 1468555 (JP)
(74) Representative: Wagner, Karl H.
(86) International application number: PCT/JP2005/013825
(87) International publication number: WO 2006/016484

(57) **Abstract**

[Problems]

The present invention provides a chip breaker for reliably breaking chips produced during a cutting operation by an annular cutter.

[Means for Solving Problems]

Disclosed is a chip breaker having a surface (26) facing the upstream side of the rotational direction of an annular cutter and extending outward relative to the radius of the annular cutter from an edge (24) adjacent to the outer peripheral surface of the annular cutter. The edge (24) is inclined from a first end (27) positioned at a small distance from the outer peripheral surface of the annular cutter toward a second end (28) postioned closer to the surface of a workpiece than the first end and spaced at a greater distance from the outer peripheral surface of the annular cutter than the first end.

## Description

### TECHNICAL FIELD:

The present invention relates to a chip breaker for an annular cutter for breaking chips, which are produced by cutting teeth at the leading end of the annular cutter during a cutting operation and which move upwardly through flutes (i.e. chip discharge grooves) formed in the outer peripheral surface of the annular cutter toward a surface of a workpiece, thereby preventing the chips from winding around the annular cutter.

### BACKGROUND ART:

An annular cutter has a tubular cutter body provided at the leading end thereof with cutting teeth, and is driven and rotated about an axis of the cutter body, thereby performing a cutting operation.
The cutter body is provided in the outer peripheral surface thereof with chip discharge grooves, i.e. flutes, spirally extending in a direction of the above-mentioned rotational axis. Chips produced by the cutting teeth are intended to move upwardly through the flutes toward a surface of a workpiece. If these chips are not processed properly, they wind around the annular cutter, thus hindering the cutting operation. Accordingly, various types of chip breakers have been developed which break chips moving upwardly to the surface of the workpiece(for example, see Japanese Unexamined Utility Model Publication S62-15408, Japanese Examined Utility Model Publication S4-2760).

### DISCLOSURE OF THE INVENTION:

### PROBLEMS TO BE SOLVED BY THE INVENTION:

Such chip breakers are positioned adjacent to the outer peripheral surface of the annular cutter, and have an edge parallel to an outer peripheral surface contour of the annular cutter parallel to the rotational axis of the annular cutter. Chips, moving upwardly to the surface of the workpiece, engage with the edge, thereby being broken between the outer peripheral surface of the rotating annular cutter and the edge. In such conventional chip breakers for annular cutters, however, chips tend to be disengaged from the edge (i.e. chips tend to move upwardly along and beyond the edge), which causes a problem that the chips are not broken properly.

### MEANS FOR SOLVING THE PROBLEM:

In view of the foregoing, an object of the present invention is to provide a chip breaker for an annular cutter for breaking chips more effectively.
More specifically, the present invention provides a chip breaker for an annular cutter which is positioned adjacent to the outer peripheral surface of the annular cutter performing a cutting operation and which is used for breaking chips produced by cutting edges of the annular cutter and moving upwardly through flutes of the annular cutter to a surface of a workpiece. The chip breaker includes an edge positioned adjacent to the outer peripheral surface of the annular cutter, and a surface extending radially outwardly of the annular cutter from the edge and facing the upstream side of the rotational direction of the annular cutter. The edge is inclined from a first end positioned at a small distance from the outer peripheral surface of the annular cutter toward a second end positioned closer to the surface of the workpiece than the first end and spaced at a greater distance from the outer peripheral surface of the annular cutter than the first end.

In the above-described chip breaker for an annular cutter, the edge is inclined. Therefore, the chip breaker downwardly urges chips moving upwardly to the surface of the workpiece and spreading outwardly in the radial direction of the annular cutter to engage with the edge, thereby preventing the chips from being disengaged from the edge when the annular cutter is rotating. Thus, it is possible to surely break the chips which tend to rotate with the flutes of the rotating annular cutter.

Specifically, the edge is formed to be inclined at an angle of 5 to 30 degrees, preferably approximately 10 degrees, in relation to an outer peripheral surface contour of the annular cutter parallel to a rotational axis of the annular cutter. When the edge is inclined at an angle other than the above-mentioned angle range, chips are not broken effectively. Accordingly, an angle of approximately 10 degrees is the most suitable for breaking chips.

More preferably, the edge is formed so as to have an edge angle of not more than 90 degrees between the surface facing the upstream side of the rotational direction of the annular cutter and a surface extending from the edge toward the downstream side of the rotational direction of the annular cutter.

### BRIEF DESCRIPTION OF THE DRAWINGS:

FIG. 1 is a side view of a cutting device equipped with the chip breaker for an annular cutter according to the present invention.
FIG. 2 is a front view of the cutting device.
FIG. 3 is a sectional view of the annular cutter as viewed in a plane including the rotational axis of the annular cutter, showing the location of the chip breaker relative to the annular cutter in a cutting operation.
FIG. 4 is a cross-sectional view taken along line IV-IV of FIG. 3.

### EXPLANATION OF REFERENCE SYMBOLS:

- 10: chip breaker
- 12: annular cutting device
- 14: electromagnetic base
- 16: main body
- 18: rotating handle
- 20: motor
- 22: annular cutter
- 22-1: contour
- 22-2: cutting teeth
- 22-3: flute
- 24: edge
- 26, 30: surface
- 27: first end
- 28: second end
- C: chip
- W: workpiece

### BEST MODE FOR CARRYING OUT THE INVENTION:

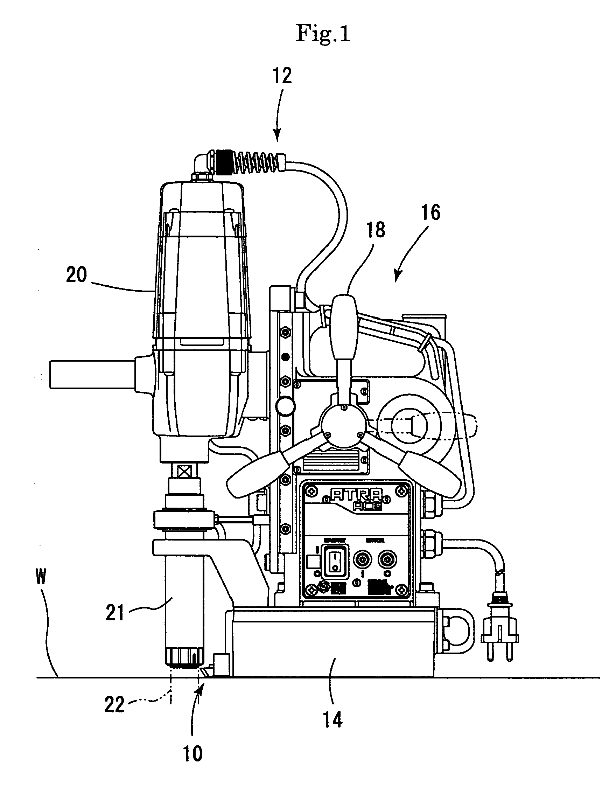

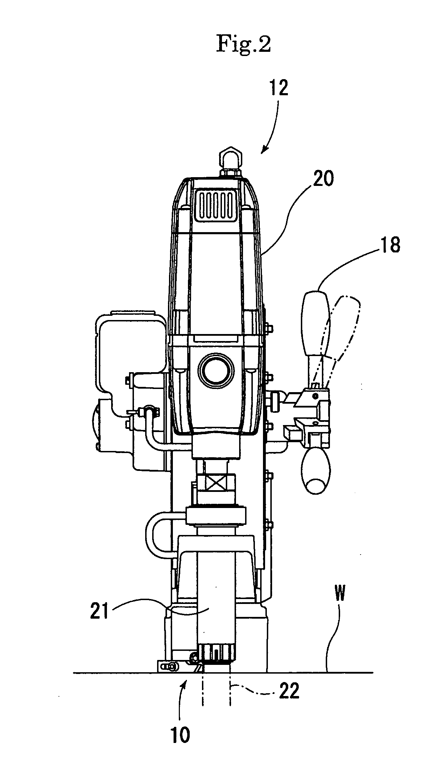

An embodiment of the chip breaker for an annular cutter according to the present invention will now be described with reference to the accompanying drawings. FIGS. 1 and 2 show an annular cutting device 12 equipped with a chip breaker 10 according to the present invention.

As shown in the figures, the annular cutter cutting device 12 includes a main body 16 having an electromagnetic base 14 for electromagnetically anchoring the device 12 onto a workpiece W, e.g. a steel plate, a motor 20 which is movably mounted to the main body and is moved in the up-and-down direction relative to the main body by rotating a rotating handle 18 attached to the main body, and an annular cutter 22 drivingly connected to and rotated by an arbor 21 which is driven and rotated by the motor.

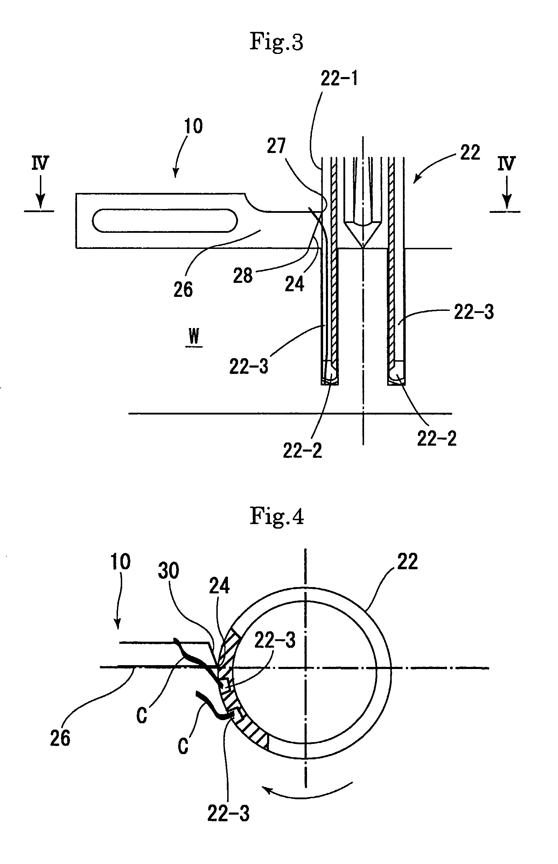

A chip breaker 10 is fixed to the main body 16 so as to be positioned beside the electromagnetic base 14 and adjacent to the annular cutter 22. As shown in the figures, the chip breaker 10 has a shape similar to that of a tool bit of a lathe. As shown in FIGS. 3 and 4, the chip breaker 10 has a surface 26 extending outwardly in the radial direction of the annular cutter 22 from an edge 24 adjacent to the outer peripheral surface of the annular cutter 22 and facing the upstream side of the rotational direction of the annular cutter 22. In the illustrated example, the surface 26 is provided so as to be aligned with a radius extending from a rotational axis of the annular cutter 22.

The edge 24 is inclined from a first end 27 positioned at a small distance (i.e. a clearance enough to prevent the edge 24 from contacting the annular cutter 22 when the annular cutter 22 vibrates during a cutting operation) from the outer peripheral surface of the annular cutter 22 toward a second end 28 positioned closer to a surface of the workpiece W than the first end 27 and spaced at a greater distance from the outer peripheral surface of the annular cutter than the first end. The edge 24 is formed so as to be inclined at an angle of 5 to 30 degrees, preferably approximately 10 degrees, to an outer peripheral surface contour 22-1 of the annular cutter 22 parallel to the rotational axis of the annular cutter 22.
Further, the chip breaker has a surface 30 extending from the edge 24 to the downstream side of the rotational direction of the annular cutter 22. The surface 30 is provided so as to form an edge angle of not more than 90 degrees with the surface 26.

In a cutting operation, chips C produced by cutting teeth 22-2 at the leading end of the annular cutter 22 move upwardly through flutes 22-3 formed in the outer peripheral surface of the annular cutter 22 toward the surface W of the workpiece, and spread on the surface outwardly in the radial direction of the annular cutter 22. Since the annular cutter 22 is rotating, the chips C are engaged with the edge 24 and restrained by the edge from moving upwardly, thereby being broken while rotating with the annular cutter 22.

In the illustrated example, the chip breaker for an annular cutter is arranged so as to almost contact the surface of the workpiece. The chip breaker, however, may be adapted to be movable in the direction of the rotational axis of the annular cutter. In other words, it is possible to position the edge at a greater distance from the surface of the workpiece, if necessary, in order to prevent the chips from moving upwardly beyond the edge of the chip breaker. Alternatively, the edge itself may be elongated in the perpendicular direction (as viewed in the drawing) in a state in which the edge is fixed to the main body, which provides substantially the same effect as that in the above-described structure.
In the illustrated example, as shown in FIG. 4, the surface of the chip breaker extending outwardly in the radial direction of the annular cutter is aligned with the radius of the annular cutter. The surface, however, may be arranged to be inclined relative to the radius.

## Claims

1. A chip breaker for an annular cutter for breaking chips which are produced by cutting edges of the annular cutter performing a cutting operation and which move upwardly through flutes of the annular cutter toward a surface of a workpiece, the chip breaker positioned adjacent to the outer peripheral surface of the annular cutter performing a cutting operation, the chip breaker comprising:
an edge positioned adjacent to the outer peripheral surface of the annular cutter and inclined from a first end positioned at a small distance from the outer peripheral surface of the annular cutter toward a second end positioned closer to the surface of the workpiece than the first end and spaced at a greater distance from the outer peripheral surface of the annular cutter than the first end; and,
a surface extending outwardly in the direction of the annular cutter from the edge and facing the upstream side of a rotational direction of the annular cutter.

2. A chip breaker for an annular cutter according to claim 1, wherein the edge is inclined at an angle of 5 to 30 degrees to an outer peripheral surface contour of the annular cutter parallel to a rotational axis of the annular cutter.

3. A chip breaker for an annular cutter according to claim 1, wherein the edge is inclined at an angle of approximately 10 degrees to the outer peripheral surface contour of the annular cutter parallel to the rotational axis of the annular cutter.

4. A chip breaker for an annular cutter according to any one of claims 1 to 3, wherein the chip breaker has an edge angle of not more than 90 degrees between the surface facing the upstream side of the rotational direction of the annular cutter and a surface extending from the edge to the downstream side of the rotational direction of the annular cutter.
